Europäisches Patentamt

European Patent Office

Office européen des brevets

(11) Veröffentlichungsnummer: **0 271 740 B1**

# EUROPÄISCHE PATENTSCHRIFT

(45) Veröffentlichungstag der Patentschrift: **22.05.91**

(51) Int. Cl.5: **B60R 16/02**

(21) Anmeldenummer: **87117189.8**

(22) Anmeldetag: **21.11.87**

(54) **Anordnung zum Ein- bzw. Ausschalten eines in einem Kraftfahrzeug betriebenen Gerätes.**

(30) Priorität: **17.12.86 DE 3642996**

(43) Veröffentlichungstag der Anmeldung:
**22.06.88 Patentblatt 88/25**

(45) Bekanntmachung des Hinweises auf die
Patenterteilung:
**22.05.91 Patentblatt 91/21**

(84) Benannte Vertragsstaaten:
**AT BE CH DE FR GB IT LI**

(56) Entgegenhaltungen:
**US-A- 3 646 354**
**US-A- 3 739 187**

**PATENT ABSTRACTS OF JAPAN, Band 9, Nr.
25 (M-355)[1748], 2. Februar 1985; & JP-A-59
171 744 (MITSUBISHI DENKI K.K.) 28-09-1985**

(73) Patentinhaber: **GRUNDIG E.M.V. Elektro-
Mechanische Versuchsanstalt Max Grundig
holländ. Stiftung & Co. KG.
Kurgartenstrasse 37
W-8510 Fürth/Bay.(DE)**

(72) Erfinder: **Glaab, Arnold, Dr. GRUNDIG E.M.V.
Max Grundig Holländ Stiftung & Co KG
Kurgartenstrasse 37 D-8510
Fürth/Bayern(DE)**
Erfinder: **Fischelmayer, Heinrich GRUNDIG
E.M.V.
Max Grundig Holländ Stiftung & Co KG
Kurgartenstrasse 37 D-8510
Fürth/Bayern(DE)**
Erfinder: **Baumgartner, Franz-Xaver GRUNDIG
E.M.V.
Max Grundig Holländ Stiftung & Co KG
Kurgartenstrasse 37 D-8510
Fürth/Bayern(DE)**

## Beschreibung

Die Erfindung betrifft eine Anordnung zum Ein- bzw. Ausschalten eines in einem Kraftfahrzeug betriebenen Gerätes, insbesondere eines Autoradios, bestehend aus einer mit dem Zündschloss des Kraftfahrzeugs betätigbaren Schalteinrichtung sowie einer im Gerät selbst angeordneten Schalteinrichtung.

Grundsätzlich bestehen in einem Kraftfahrzeug zwei Anschlußmöglichkeiten für ein Autoradio. Entweder das Gerät wird an eine ständig stromführende Leitung angeschlossen oder es wird mit einer Leitung verbunden, bei der die Stromzufuhr durch das Zündschloß des Kraftfahrzeuges unterbrochen werden kann. Die erste Möglichkeit hat den Nachteil, daß das Gerät bei Fahrtantritt und Fahrtende stets über den im Gerät angeordneten Schalter neu bedient werden muß, wobei das Abschalten beim Verlassen des Fahrzeugs sehr leicht vergessen werden kann und die Fahrzeugbatterie hierdurch unnötig entladen wird.

Dieser Nachteil wird durch die zweite Anschlußmöglichkeit zwar umgangen, da das über den Zündschalter angeschlossene Gerät bei der Zündschloß-Stellung "Aus" automatisch stromlos wird. Für den Betrieb des Gerätes bei abgeschaltetem Motor weist das Zündschloß eine sogenannte "Park"-Stellung auf, bei der die Stromzufuhr zu dem angeschlossenen Gerät hergestellt wird, ohne die Zündung einzuschalten. Der Zündschlüssel ist in dieser Stellung in der Regel jedoch nicht abziehbar. Bei im Auto zurückgelassenen Kindern, die während der Abwesenheit der Eltern z. B. eine Cassette hören, stellt dies ein erhebliches Risiko dar. Auch wenn der Schlüssel abziehbar wäre, so könnte dies häufig vergessen werden.

Der Erfindung liegt die Aufgabe zugrunde, eine Anordnung der im Oberbegriff des Anspruchs 1 angegebenen Art so auszubilden, daß auch bei entfallender "Park"-Stellung des Zündschlosses das im Fahrzeug betriebene Gerät zum einen über das Zündschloß ein- und ausschaltbar ist und zum anderen bei der Zündschloß-Stellung "Aus" betrieben werden kann.

Diese Aufgabe wird gemäß der Erfindung durch die im Kennzeichen des Patentanspruchs 1 angegebenen Merkmale gelöst. Vorteilhafte Ausgestaltungen der Erfindung sind in den Unteransprüchen gekennzeichnet.

Bei der Anordnung gemäß der Erfindung liefert die mit dem Zündschloß gekoppelte Schalteinrichtung an ihrem Ausgang einen der jeweiligen Stellung des Zündschlosses entsprechenden logischen Pegel. Ferner ist eine bistabile Kippschaltung vorgesehen, die bei jeder Betätigung der im Gerät selbst angeordneten Schalteinrichtung ihren Schaltzustand ändert und an ihrem Ausgang ebenfalls einen dem jeweiligen Schaltzustand entsprechenden logischen Pegel liefert. Die von der Schalteinrichtung des Zündschlosses sowie die von der bistabilen Kippschaltung gelieferten digitalen Signale sind über eine Schaltlogik verknüpft, die das zum Ein- bzw. Ausschalten des Gerätes notwendige Steuersignal generiert.

Die vorgesehene Schaltlogik ist in vorteilhafter Weise so ausgelegt, daß das zu betreibende Gerät ,mittels der im Gerät selbst angeordneten Schalteinrichtung unabhängig von der Stellung des Zündschlosses ein- und ausschaltbar ist. Ferner wird die Stromzufuhr zu dem Gerät beim Umstellen des Zündschlosses von der "Ein"- in die "Aus"-Stellung (Abstellen des Fahrzeugmotors) grundsätzlich unterbrochen, während beim Umstellen des Zündschlosses von der "Aus"- in die "Ein"-Stellung der ursprüngliche Betriebszustand des Gerätes wieder hergestellt wird. War zum Beispiel das Gerät vor dem Abstellen des Fahrzeugmotors eingeschaltet, so wird dieser Betriebszustand beim erneuten Starten des Motors wieder hergestellt. Demnach wird über die Schaltlogik sowohl die Schaltstellung und die Schaltrichtung des Zündschlosses, als auch die Schaltstellung der im Gerät angeordneten bistabilen Kippschaltung ausgewertet und hiervon abhängig das zum Ein- bzw. Ausschalten des Gerätes notwendige Steuersignal generiert.

Ein Ausführungsbeispiel der Erfindung ist im folgenden anhand einer Zeichnung näher erläutert.

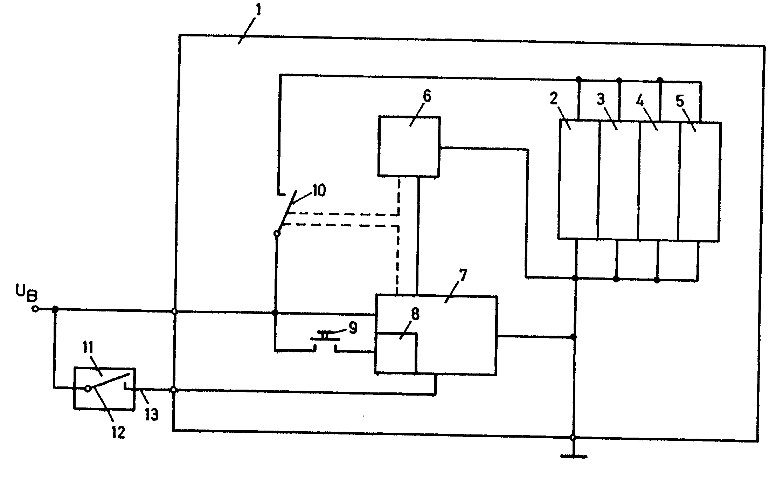

Die Figur zeigt ein in einem Kraftfahrzeug zu betreibendes Gerät 1, bestehend aus einem Empfangsteil 2, einem Cassettenteil 3, einem NF-Teil 4 und einer Beleuchtungseinrichtung 5. Das Gerät ist zum einen direkt und zum anderen über ein Zündschloß 11 mit der Batteriespannung $U_B$ verbunden. Das Zündschloß 11 verfügt lediglich über zwei Stellungen und ist mit einer Schalteinrichtung 12 gekoppelt. Die Batteriespannung $U_B$ führt über einen von einer Schaltlogik 7 und einer Zeitschaltung 6 steuerbaren Schalter 10 zu den zu versorgenden Geräteschaltungen 2 bis 5. In die Schaltlogik ist eine bistabile Kippschaltung 8, z. B. ein Flip-Flop, integriert, dessen Schaltzustand über eine Schalteinrichtung 9 veränderbar ist, und zwar so, daß sich bei jeder Betätigung der Schalteinrichtung 9 der Schaltzustand des Flip-Flop 8 ändert. Die Stellung des Zündschlosses 11 ermittelt die Schaltlogik 7 über den Ausgang 13 der Schalteinrichtung 12.

Über die Schalteinrichtung 12 und das Flip-Flop 8 stehen der Schaltlogik 7 somit digitale Informationen zur Verfügung, die bei entsprechender logischer Verknüpfung die gewünschten Schaltfunktionen steuern. Die logische Verknüpfung der beiden digitalen Signale kann hierbei entweder über eine geeignete Anordnung von Gattern oder durch eine kostengünstigere Software programmgesteuert über einen Mikroprozessor erfolgen.

Die im Ausführungsbeispiel vorgesehene Zeitschaltung 6 beläßt das Gerät 1 in vorteilhafter Weise nur für eine vorgegebene Zeit im eingeschalteten Zustand. Die betreffende Zeitschaltung wird jedoch nur bei der Verknüpfung bestimmter digitaler Signale aktiviert, so zum Beispiel, wenn der Ausgang 13 der Schalteinrichtung 12 auf einem "Low-Pegel" liegt und die Schaltstellung des Flip-Flops 8 durch Betätigung der Schalteinrichtung 9 von "Low" auf "High" geht. Hierbei befindet sich das Zündschloß in Stellung "Aus" und das Gerät wird über die Schalteinrichtung 9 eingeschaltet.

Die Schalteinrichtung 9 ist bevorzugt als nichtrastende Tipptaste ausgelegt, die den herkömmlichen strommäßig stark belasteten Betriebsspannungsschalter ersetzt und z. B. am Lautstärkesteller des Gerätes 1 angeordnet sein kann.

## Ansprüche

1. Anordnung zum Ein- bzw. Ausschalten eines in einem Kraftfahrzeug betriebenen Gerätes, insbesondere eines Autoradios, bestehend aus einer mit dem Zündschloß (11) des Kraftfahrzeuges betätigbaren Schalteinrichtung (12) sowie einer im Gerät selbst angeordneten Schalteinrichtung (9), **dadurch gekennzeichnet,** daß das Zündschloß (11) lediglich eine "Ein"- und eine "Aus"-Stellung zuläßt und die hiermit gekoppelte Schalteinrichtung (12) an ihrem Ausgang (13) einen der jeweiligen Stellung entsprechenden logischen Pegel liefert, daß ferner eine bistabile Kippschaltung (8) vorgesehen ist, die bei jeder Betätigung der im Gerät (1) selbst angeordneten Schalteinrichtung (9) ihren Schaltzustand ändert und an ihrem Ausgang ebenfalls einen dem jeweiligen Schaltzustand entsprechenden logischen Pegel liefert, und daß die von der Schalteinrichtung (12) des Zündschlosses (11) sowie die von der bistabilen Kippschaltung (8) gelieferten digitalen Signale über eine Schaltlogik (7) verknüpft sind, die sowohl die Schaltstellung und die Schaltrichtung des Zündschlosses, als auch die Schaltstellung der im Gerät angeordneten bistabilen Kippschaltung auswertet und hiervon abhängig das zum Ein- bzw. Ausschalten des Gerätes notwendige Steuersignal generiert und an eine Schalteinrichtung (10) abgibt.

2. Anordnung nach Anspruch 1, **dadurch gekennzeichnet,** daß als bistabile Kippschaltung (8) ein Flip-Flop vorgesehen ist.

3. Anordnung nach Anspruch 1 oder 2, **dadurch gekennzeichnet,** daß die im Gerät (1) selbst angeordnete Schalteinrichtung (9) als nichtrastende Tipptaste ausgebildet ist.

4. Anordnung nach einem oder mehreren der Ansprüche 1 bis 3, **dadurch gekennzeichnet,** daß die logische Verknüpfung der beiden digitalen Signale über eine geeignete Anordnung von Gattern (7) erfolgt.

5. Anordnung nach einem oder mehreren der Ansprüche 1 bis 3, **dadurch gekennzeichnet,** daß die logische Verknüpfung der beiden digitalen Signale programmgesteuert über einen Mikroprozessor (7) erfolgt.

6. Anordnung nach einem oder mehreren der Ansprüche 1 bis 5, **dadurch gekennzeichnet,** daß bei der Verknüpfung bestimmter digitaler Signale eine Zeitschaltung (6) aktiviert wird, die das Gerät (1) nur für eine vorgegebene Zeit im eingeschalteten Zustand beläßt.

7. Anordnung nach einem oder mehreren der Ansprüche 1 bis 6, **dadurch gekennzeichnet,** daß die Schaltlogik (7) so ausgelegt ist, daß das Gerät (1) unabhängig von der Stellung des Zündschlosses (11) durch die Schalteinrichtung (9) ein- und ausschaltbar ist, daß beim Umstellen des Zündschlosses (11) von der "Ein"- in die "Aus"-Stellung die Stromzufuhr über die Schalteinrichtung (10) grundsätzlich unterbrochen wird, und daß beim Umstellen des Zündschlosses (11) von der "Aus"- in die "Ein"-Stellung der ursprüngliche Betriebszustand wieder hergestellt wird.

## Claims

1. Arrangement for switching on and off an apparatus, in particular a car radio, operated in a motor vehicle, consisting of a switching device (12) which can be actuated with the ignition lock (11) of the motor vehicle as well as of a switching device (9) arranged in the apparatus itself, characterised in that the ignition lock (11) only permits an "on" and an "off" position and the switching device (12) coupled hereto supplies at its output (11) a logic level corresponding to the respective position, in that, in addition, a bistable trigger circuit (8) is provided which changes its switching state at each actuation of the switching device (9) arranged in the apparatus (1) itself and also supplies at its output a logic level corresponding to the respective switching state, and in that the digital signals supplied by the switching device (12) of the ignition lock (11) as well as those supplied by the bistable trigger circuit (8) are connected via a switching logic (7) which evaluates both the switching position and the switching direction of the ignition lock and also the switching position of the bistable trigger circuit arranged in the apparatus and generates as a function of this the control signal which is necessary for switching on and off the apparatus and transmits said signal to a switching device (10).

2. Arrangement according to Claim 1, characterised in that a flip-flop is provided as bistable trigger circuit (8).

3. Arrangement according to Claim 1 or 2, characterised in that the switching device (9) arranged in the apparatus (1) itself is constructed as a non-locking touch-control key.

4. Arrangement according to one or more of Claims 1 to 3, characterised in that the logical connection of the two digital signals occurs by means of a suitable arrangement of gates (7).

5. Arrangement according to one or more of Claims 1 to 3, characterised in that the connection of the two digital signals occurs with program control by means of a microprocessor (7).

6. Arrangement according to one or more of Claims 1 to 5, characterised in that during the connection of certain digital signals a timer circuit (6) is actuated which only leaves the apparatus (1) in the switched-on state for a predetermined time.

7. Arrangement according to one or more of Claims 1 to 6, characterised in that the switching logic (7) is configured in such a way that the apparatus (1) can be switched on and off by the switching device (9) independently of the position of the ignition lock (11), in that, when switching over the ignition lock (11) from the "on" into the "off" position, the power supply via the switching device (10) is always interrupted, and in that, when switching over the ignition lock (11) from the "off" into the "on" position, the original operating state is restored.

**Revendications**

1. Dispositif pour raccorder et déconnecter un appareil fonctionnant dans un véhicule automobile, notamment un autoradio, constitué par un dispositif de commutation (12) pouvant être actionné au moyen de l'interrupteur d'allumage (11) du véhicule automobile, ainsi que par un dispositif de commutation (9) disposé dans l'appareil lui-même, caractérisé par le fait que l'interrupteur d'allumage (11) peut prendre uniquement une position fermée et une position ouverte et que le dispositif de commutation (12) accouplé à cet interrupteur délivre, sur sa sortie (13), un niveau logique correspondant à la position respective, qu'en outre il est prévu un circuit à bascule bistable (8), qui, lors de chaque actionnement du dispositif de commutation (9) disposé dans l'appareil (1) lui-même, modifie l'état de commutation de ce dispositif et délivre, à sa sortie, également un niveau logique correspondant à l'état respectif de commutation, et que les signaux numériques envoyés par le dispositif de commutation (12) de l'interrupteur d'amorçage (11) ainsi que les signaux numériques délivrés par le circuit à bascule bistable (8) sont combinés entre eux au moyen d'une logique de commutation (7), qui évalue aussi bien la position de commutation que le sens de commutation de l'interrupteur d'allumage et également la position de commutation du circuit à bascule bistable installé dans l'appareil et produit, à partir de là, le signal de commande nécessaire en fonction du branchement ou de la déconnexion de l'appareil et l'envoie à un dispositif de commutation (10).

2. Dispositif selon la revendication 5, caractérisé en ce qu'une bascule bistable est prévue en tant que circuit à bascule bistable (8).

3. Dispositif selon la revendication 1 ou 2, caractérisé en ce que le dispositif de commutation (9) disposé dans l'appareil (1) lui-même est agencé sous la forme d'une touche à impulsions qui ne s'encliquette pas.

4. Dispositif selon une ou plusieurs des revendications 1 à 3, caractérisé en ce que la combinaison logique des deux signaux numériques est réalisée au moyen d'un ensemble approprié de portes (7).

5. Dispositif selon une ou plusieurs des revendications 1 à 3, caractérisé en ce que la combinaison logique des deux signaux numériques est réalisée d'une manière commandée par un programme, par l'intermédiaire d'un microprocesseur (7).

6. Dispositif selon une ou plusieurs des revendications 1 à 5, caractérisé en ce que, lors de la combinaison de signaux numériques déterminés, il se produit l'activation d'un circuit de temporisation (6), qui laisse l'appareil (1) à l'état branché uniquement pendant un intervalle de temps prédéterminé.

7. Dispositif selon une ou plusieurs des revendications 1 à 6, caractérisé en ce que la logique de commutation (7) est agencée de telle sorte que l'appareil (1) peut être branché et déconnecté indépendamment de la position de l'interrupteur d'allumage (11), par le dispositif de commutation (9), que lors de la commutation de l'interrupteur d'allumage (11) de la position fermée dans la position "ouverte", l'envoi de courant est interrompu fondamentalement par l'intermédiaire du dispositif de commutation (10) et que lors de la commutation de l'interrupteur d'allumage (11) de la position "ouverte" dans la position "fermée", l'état initial de fonctionnement est rétabli.